# EUROPEAN PATENT APPLICATION

(11) **EP 1 455 171 A1**
(43) Date of publication of application: **08.09.2004**
(21) Application number: 04251166.7
(22) Date of filing: 01.03.2004
(51) Int. Cl.: G01K 17/20

(54) **Improvements in and relating to the measurement of heat flux in a heated chamber**

(30) Priority: 03.03.2003 GB 0304790
(71) Applicant: UNITED BISCUITS (UK) LIMITED, Hayes, Middlesex UB4 8EE (GB)
(72) Inventor: Rolston, Robert Mitchell, Bicester Oxfordshire, OX25 4AF (GB)
(74) Representative: Humphreys, Ceris Anne

(57) **Abstract**

A method of measuring heat flux in a heated chamber comprising conveying through at least a portion of the chamber a heat flux measuring device comprising at least one sensor. The heat flux measuring device produces an output from which can be derived a value that is representative of heat flux incident upon an exposed surface of the sensor. The method further comprises monitoring the said output, the said exposed surface being preheated, prior to monitoring the said output, to a temperature exceeding the dew point of gas within the heated chamber, the preheating being effected by thermal conduction.

## Description

The invention relates to the measurement of heat flux in heated chambers, for example, in ovens of the kind that are suitable for use in continuous processes in which material to be heated (which may be in the form of discrete articles) is transported through the oven and is heated progressively during its passage through the oven. Such ovens are known as tunnel ovens because they are elongate and have at one end an entrance through which the material is introduced into the oven and, at the other end, an exit through which the material is withdrawn. Tunnel ovens are used for a variety of purposes, for example, to dry material or to effect the baking of food products.

The heat flux to be measured is that incident on a surface of the material to be heated. In general, the heat flux will have radiative and convective components. The material will normally be supported from below on the upper run of an endless band conveyor and, where the band is imperforate, the only exposed surface of the material will be its upper surface. Where the band is a mesh, the lower surface of the material will also be partly exposed to the heat flux.

It has previously been proposed to measure the heat flux by transporting through the oven a device comprising a sensor having a surface exposed to the heat flux to be measured. The exposed surface may be a radiation-absorbing surface so that the sensor responds to the total heat flux incident upon the surface. If it is wished to measure separately the radiative and convective components of the heat flux, that can be done by using an additional sensor having a radiation-reflecting exposed surface, so that the additional sensor responds essentially only to the convective component of the heat flux. Measurements made using the radiation-absorbing sensor can be compared with measurements made using the reflecting sensor to derive a value for the radiative component of the heat flux. Of course, neither sensor will behave either as a black body or as a perfect reflector; each sensor will both absorb and reflect radiation incident on it. It is strictly necessary only that the two sensors should have different absorptivities, but the more nearly the radiation-absorbing sensor behaves as a black body and the more nearly the reflecting sensor behaves as a perfect reflector the better the apparatus will perform. Throughout the specification, references to a surface or a sensor being radiation-absorbing or radiation-reflecting are to be understood as taking account of those facts.

An apparatus having two such sensors and intended to enable the axial profile of the heat flux along an oven to be ascertained is described in GB 2 183 346B. In WO98/09143, relatively large variations in heat flux along the length of the oven and relatively smaller variations across the oven are taken into account by conveying through the oven two such sensors, one behind the other, the readings from the sensors being time-adjusted according to their speed of travel. EP 1 195 587 discloses that the use of certain configurations of radiation-absorbing and radiation-reflecting sensors is able to compensate for variations in heat flux along and across an oven, without the need to provide for time-adjustment of readings. WO98/09143 and EP 1 195 587 also disclose bringing the upper surfaces of the sensors to a temperature exceeding the dew point of the gas in the oven before they enter the oven by exposing those surfaces, but not the remainder of the apparatus, to a temperature-controlled air-flow in order to avoid distortions in heat flux measurement.

The invention provides a method of measuring heat flux in a heated chamber comprising conveying through at least a portion of the chamber a heat flux measuring device comprising at least one sensor, the heat flux measuring device producing an output from which can be derived a value that is representative of heat flux incident upon an exposed surface of the sensor, and monitoring the said output, the said exposed surface being preheated, prior to monitoring the said output, to a temperature exceeding the dew point of gas within the heated chamber, the preheating being effected by thermal conduction.

The invention also provides apparatus for measuring heat flux in a heated chamber comprising at least one sensor having an exposed surface, the apparatus being arranged to produce an output from which can be derived a value that is representative of heat flux incident upon the exposed surface of the sensor, and also comprising means for preheating the said exposed surface by thermal conduction.

It has been found that preheating the exposed surface of the sensor using thermal conduction has significant advantages over the use of a temperature-controlled air flow as previously suggested. The use of the air flow necessitates a relatively costly, bulky fan and heater arrangement, whereas heating by thermal conduction can be carried out in a much simpler and economic manner, advantageously using a heated surface, preferably an electrically-heated surface, which is in, or can be brought into, thermal contact with the sensor, the said surface forming part of the preheating means or being heated by the preheating means, in use.

The said output from the heat flux measuring device advantageously is, or includes, a measure of the temperature difference across a thermally insulating layer located between the exposed surface of the sensor and a heat sink, the heat sink being in thermal contact with the thermally insulating layer. Preferably, the sensor comprises first and second surfaces bounding a region, a thermally insulating layer substantially occupying the said region, and means for providing an output which is a measure of the temperature difference across the layer, the said first surface of the sensor being in thermal contact with a heat sink and the said second surface of the sensor being the said exposed surface.

The exposed surface of the sensor may be preheated by placing a heated surface, preferably a surface of an electrically-heated plate, over and in contact with the exposed surface until the exposed surface reaches the said temperature, and then removing the said heated surface from the said exposed surface prior to monitoring the said output.

Alternatively and advantageously, the preheating is carried out by activating an electrical heater incorporated in the device. With a sensor comprising a thermally insulating layer in thermal contact with a heat sink as referred to above, it has been found that the electrical heater may be located between the thermally insulating layer and the heat sink, or it may be located within the heat sink itself in which case it heats the heat sink which in turn can provide a heated surface in thermal contact with the sensor. Such a sensor operates to measure heat flux on the basis that heat flux incident on the exposed surface and passing into the heat sink is slowed down as it travels through the thermally insulating layer, which is made of a material of substantially lower thermal conductivity than that of the heat sink, to an extent that a measurable temperature difference between the upper and lower surfaces of that layer can be obtained in practice. The thermally insulating layer is, however, generally of relatively low heat capacity to achieve a fast response time. It has been found that an electrical heating device located below the thermally insulating layer can be used to preheat the exposed surface by thermal conduction through the thermally insulating layer to the required temperature in a convenient and compact manner.

In such an arrangement, the electrical heater may be in the form of a cartridge heater, more especially a heater comprising an electrical heating element contained within a tubular casing, which may be inserted in a suitably-sized aperture or channel in the heat sink. In another option, the electrical heater may be a foil heater, which may take the form of an electrical heating element sandwiched between two thermally conductive foils, for example, made of aluminium, or may take the form of an etched metallic foil on a dielectric backing of, for example, Mylar, Kapton (trade mark) or mica. Such a heater may be located between the thermally insulating layer and the heat sink, or within the heat sink.

The exposed surface is advantageously preheated to a temperature within the range of from 80°C to 90°C. Preferably, there is provided means for enabling temperature control of the preheating step. The said temperature control means may comprise a thermocouple junction located on or adjacent to the exposed surface of the sensor, but when a heat sink is provided it may be found that a sufficient guide to the preheated temperature of the exposed surface can be obtained by locating the said thermocouple junction on or within the heat sink.

After the heat flux measuring device has been conveyed through the heated chamber, it may be cooled and the exposed surface preheated again for a second pass through the chamber. Such cooling is advantageously effected in a stream of air provided by one or more cooling fans, which can be much smaller and more economical than the fans previously suggested for the preheating step. The apparatus of the invention advantageously includes a base station, which may incorporate the said cooling fan or fans, and preferably includes a preheater control unit for controlling the activation of the preheating means.

The sensor is advantageously a radiation-absorbing sensor and the exposed surface is arranged to absorb radiation. One or more further sensors may also be provided. In one advantageous arrangement, the sensor is arranged to respond to the heat flux incident upon an upper surface of an article being transported in the heated chamber and a further radiation-absorbing sensor is provided to respond to the heat flux incident upon the lower surface of the article. The article may be situated on a perforate or imperforate band when being conveyed through the heated chamber. In such an arrangement, means, for example, a thermocouple, is preferably provided to give a measure of the temperature of the band.

One or more sensors having radiation-reflecting exposed surfaces may also be provided, and the heat flux measuring device may include an array of sensors as described and claimed in EP 1 195 587. Thus, the heat flux measuring device may have an array of sensors, each sensor comprising first and second surfaces bounding a region, a thermally insulating layer substantially occupying said region, and means for providing a signal which is a measure of the temperature difference across the layer, said first surface of each sensor being in thermal contact with a heat sink and said second surface of each sensor being exposed, a plurality of the said exposed surfaces of the array being reflective to radiation and a further plurality of the said exposed surfaces of the array being absorbent to radiation, the sensors of the array being so arranged that the area of radiation-absorbing exposed sensor surface and the area of radiation-reflecting exposed sensor surface are each equally distributed about a mid-line of the array extending along the direction in which in use the device will be transported and about a mid-line of the array extending along the direction transverse to the direction in which in use the device will be transported.

The or each exposed surface may be a surface of the thermally insulating layer of the respective sensor. Each exposed surface may instead be a surface of a layer of heat-conductive material having a surface that is in thermal contact with the thermally insulating layer of the respective sensor. For example, the exposed sensor surfaces may each be provided by a sheet of a metal foil, for example an aluminium foil, which may have been treated, for example, by blackening with a matt black paint, to render it absorbing to radiation, or left untreated to provide a radiation-reflecting surface.

As mentioned previously, the radiation-absorbing sensors will not normally be perfectly absorbing and the radiation-reflecting sensors will not normally be perfectly reflecting. For practical purposes, the results obtained may well be adequate without making allowance for that. If desired, however, allowance can be made so that the actual value of the radiation heat flux can be calculated.

Advantageously, in the or each sensor one or more thermopiles constitute the layer of a thermally insulating material and provide the output representing the temperature difference across the layer. A thermopile comprises a thin layer of an insulating material, for example, a piece of thin film of a plastics material, in which are embedded thermocouples connected in series and so arranged that the cold junction of each thermocouple is located close to one surface of the layer and the hot junction of each thermocouple is located close to the other surface of the layer. The use of a plurality of thermocouples connected in series both gives a spread of readings over the area where the thermocouple junctions are situated and, more importantly, gives a larger signal for a given temperature difference. Further because of the construction of a thermopile, it is possible to arrange that it has a small thermal capacity and hence a short response time.

It will be appreciated that the expression "thermally insulating layer" includes not only arrangements having a monolithic layer of thermally insulating material, but also arrangements in which the layer is made up of two or more sub-layers of thermally insulating material.

Where, as in the case of thermopiles, the temperature difference is determined using electrical means, it may be necessary to provide electrical insulation between the electrical means and certain adjacent parts of the device. For example, a thin electrically insulating layer may be provided to insulate the or each thermopile electrically from any additional layer of heat-conductive material that forms the absorbing surfaces and/or the reflecting surfaces of the sensor of which the thermopile forms a part.

It is desirable that the area of the exposed surface of the sensor should be large because that permits the use of a thermopile with a large number of junctions, or a plurality of such thermopiles, and so provides a larger signal representing the temperature difference across the layer of a thermally insulating material. On the other hand, it has been found that increasing the linear dimension of the exposed surfaces of the sensors in the direction of travel of the apparatus through the oven reduces the spatial resolution of the apparatus for the variations in heat flux in that direction.

Advantageously, the device comprises means for ascertaining the temperature of the exposed surface during monitoring. The said means preferably comprises a thermocouple junction located at the exposed surface and may be the same as the means for enabling temperature control of the preheating step referred to above.

Advantageously, the device comprises means for ascertaining the gas temperature in the vicinity of the or each exposed surface. Although, in principle, measurement of gas temperature in the vicinity of the or each exposed surface would give improved accuracy, it has been found that the variation in gas temperature is not usually sufficient within the vicinity of the device for it to be necessary to take that into account. The means for ascertaining the gas temperature may, for example, be a flexible air thermocouple.

Advantageously, the heat sink is a body of heat conductive material. The heat sink may comprise a metal block. In such an arrangement, the or each sensor is in thermal contact with the heat sink, by which is meant that the or each sensor is so located relative to the heat sink that good thermal conduction takes place between them. It is not necessary for the sensors to be in direct contact with the heat sink, provided that thermal conduction between the sensor and heat sink is efficient. In many cases, for example where as described above the sensor includes one or more thermopiles, the sensor should be electrically insulated from the heat sink, for example, by a thin layer of electrically insulating material which does not inhibit to any material extent thermal conduction between the sensor and the heat sink.

A method of measuring heat flux in a tunnel oven in accordance with the invention, and apparatus for carrying out the method and constructed in accordance with the invention, will now be described, by way of example, with reference to the accompanying drawings, in which:
- Fig. 1: is a diagrammatic plan view of the apparatus with certain parts removed;
- Fig. 2: is a diagrammatic section through a portion of the apparatus of Fig. 1 taken along the line II-II not to scale;
- Fig. 3: is a diagrammatic side view of a sensor of the apparatus of Figs. 1 and 2 not to scale;
- Fig. 4: is a side view of the apparatus including a base station;
- Fig. 5: is a diagrammatic section through a portion of a second form of the apparatus;
- Fig. 6: is a diagrammatic section through a portion of a third form of the apparatus;
- Fig. 7: is a diagrammatic plan view on a larger scale than Fig. 1 of a modification of part of the apparatus.

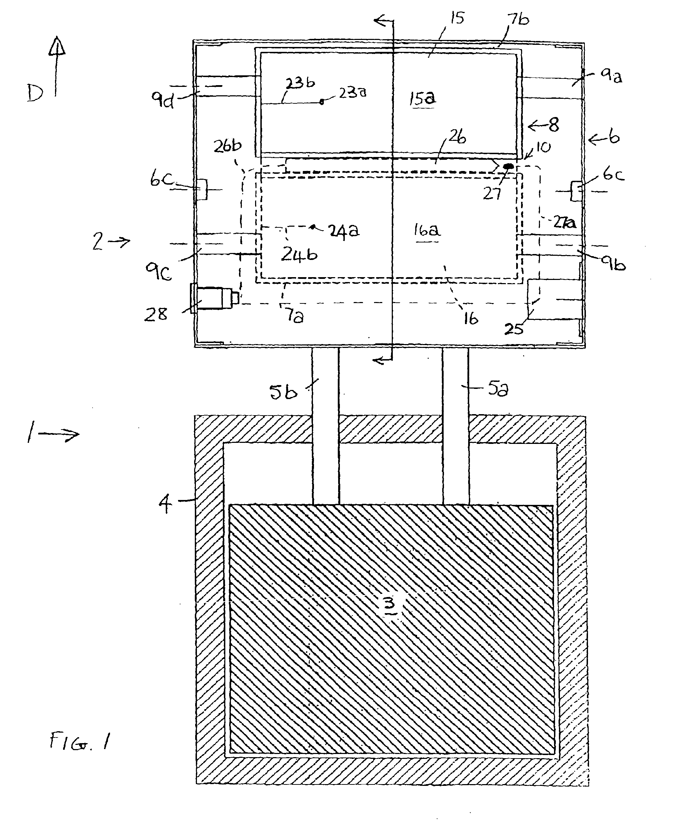

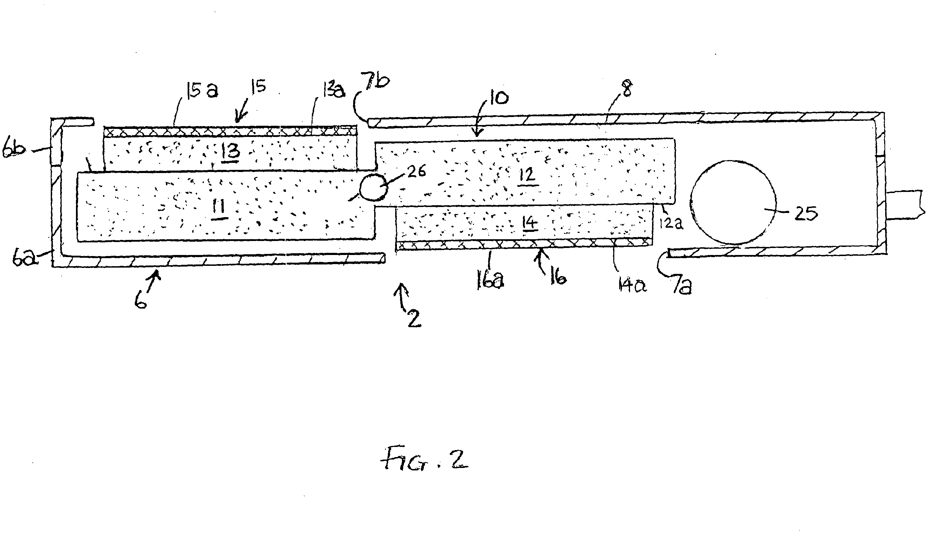

Referring to Figs. 1 and 2 of the accompanying drawings, the apparatus comprises a heat flux measuring device, indicated generally by the reference numeral 1, which, in turn, comprises a sensor head assembly, indicated generally by the reference numeral 2, and a data logger and power source shown schematically and indicated by the reference numeral 3, the power source being in the form of batteries. The data logger/power source 3 is contained within a thermally-insulating case 4 and is secured to the sensor head assembly 2 by two support bars 5a and 5b, respectively, that extend through the casing 4, and which carry electrical connections between the sensor head assembly and the data logger/power source.

The sensor head assembly 2 comprises an outer stainless steel casing, indicated generally by the reference numeral 6, comprising a lower section 6a and an upper section, or lid, 6b which can be removably secured to the lower section 6a by means of screws 6c. The lower section 6a and the upper section 6b are each formed with a rectangular window 7a and 7b, respectively.

Within the casing 6 a sensor head, indicated generally by the reference numeral 8, is mounted by means of thermally insulating supporting bars 9a, 9b, 9c and 9d, respectively. The sensor head 8 comprises a heat sink, indicated generally by the reference numeral 10, which is made of a metal with a suitably high thermal conductivity and heat capacity, aluminium being preferred on the grounds of cost and weight. The heat sink 10 comprises two body portions 11 and 12, respectively, which are integral with, but offset from, each other, and two mounting blocks 13 and 14, respectively. The body portion 11 has a surface 11a to which is secured by screws or other suitable means the mounting block 13, which is made of the same material as the body portion 11. The mounting block 13 serves to support on its surface 13a a sensor, indicated generally by the reference numeral 15, in register with but immediately below the window 7b in the upper section 6b of the casing 6, so that surface 15a of the sensor is exposed to heat flux incident upon the upper surface of the sensor head assembly 2. Similarly, the mounting block 14 is secured to a surface 12a of the body portion 12, and serves to support on its surface 14a a sensor, indicated generally by the reference numeral 16, in register with, but immediately above, the window 7a in the lower portion of the casing 6a. Surface 16a of the sensor 16 faces in a direction opposite to the surface 15a and is exposed to heat flux incident upon the lower surface of the sensor head assembly 2.

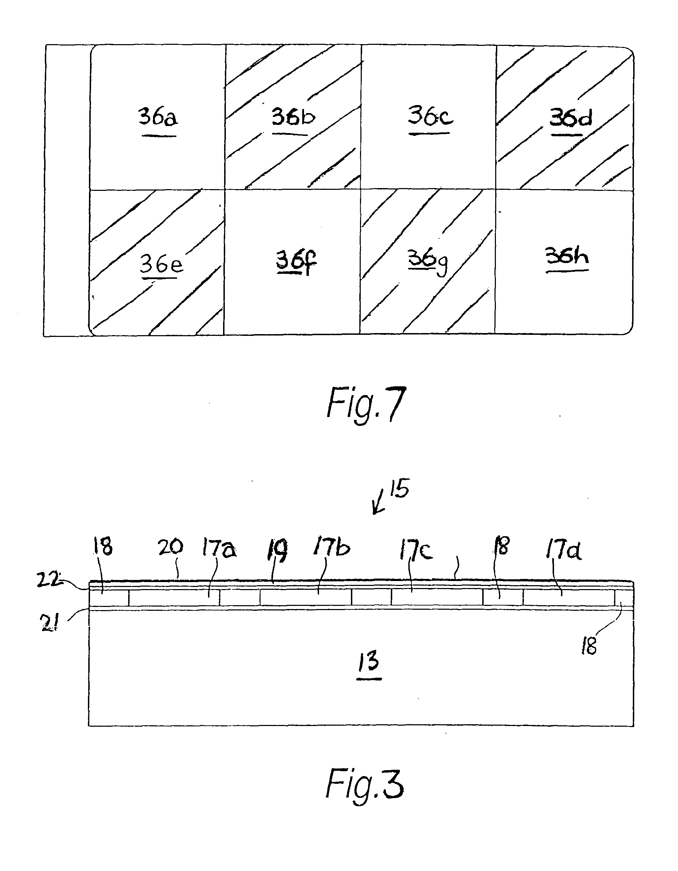

The sensors 15 and 16, respectively, are similar to each other and therefore only the sensor 15 will be described in further detail with reference to Fig. 3. The sensor 15 comprises an array of eight thermopiles 17, only four of which, 17a to 17d, are shown, the eight thermopiles being arranged in two parallel lines of four and being electrically connected in series. The thermopiles 17 are each inserted within apertures in a layer 18 of thermally insulating material. An aluminium foil 19 covers all of the thermopiles 17 and has a radiation-absorbing blackened surface layer 20, which is a thin layer of matt black paint. The surface of the aluminium foil 19 facing away from the thermopiles 17 and having the blackened surface layer 20 forms the exposed surface 15a of the sensor 15. If it is wished instead to have a relecting exposed surface, then the surface of the aluminium foil 19 can be left unblackened. The thermopiles 17 are each essentially identical in construction and include a thin sheet of thermally insulating material, for example a Kapton (trade mark) sheet, one set of junctions of the thermopile being on one side of the sheet and the other set of junctions being on the other side of the sheet. The thermopiles 17 are each mounted in thermal contact with the mounting block 13 of the heat sink 10, but electrically insulated therefrom by a thin insulating layer 21. The upper surface of each thermopile 17 is in thermal contact with the foil 19 but electrically insulated therefrom by a thin electrically insulating layer 22. The electrically insulating layers 21 and 22 may be of, for example, polyimide, and be of a thickness of 0.0005 inches (0.01mm) (Fig. 3 is diagrammatic and not drawn to scale, but to indicate the different layers of the device clearly). The thermopiles 17 give an e.m.f. indicative of the temperature difference across, and hence of the heat flux through, the thermally insulating layers of the sensor 15.

Mounted on the exposed surface 15a of the sensor 15 is a thermocouple measurement junction 23a with a connecting lead 23b. The thermocouple measurement junction 23a enables an output to be provided that is indicative of the temperature of the upper surface 15a of the sensor 15. The thermocouple junction 23a is arranged to give a measure of the temperature of the upper surface 15a during monitoring of heat flux in an oven, the lead 23b being electrically connected by a lead (not shown) extending through the bar 5b to the data logger/power source 3.

As mentioned above, the sensor 16 is constructed in a similar manner to the sensor 15, and has a thermocouple junction 24a and lead 24b on its exposed surface 16a similar to the thermocouple 23a and lead 23b of the sensor 15 to provide a measure of the temperature of the exposed surface 16a.

An additional thermocouple 25 is provided to give a measure of the temperature of an oven conveyor band on which the heat flux measuring device 1 is situated in use.

The sensor 15 also has associated with it a further thermocouple junction (not shown), for example a flexible air thermocouple, which permits measurement of the gas temperature a short distance above the surface 15a of the sensor.

Mounted within a bore 26a in the heat sink 10 and extending between the mounting blocks 13 and 14 and their respective sensors 15 and 16 is a preheater in the form of a cartridge heater 26. The cartridge heater 26 comprises an electrical heating element wound on a core (not shown) and contained within a tubular casing. The cartridge heater 26 is electrically connected via a cable 26b to a socket 28 on the casing 6. The cartridge heater 26 serves, on activation, to raise the temperature of the heat sink 10, including the surfaces 13a and 14a of the heat sink in thermal contact with the sensors 15 and 16, so that heat is transmitted by thermal conduction through the relatively thin thermally insulating layers of the sensors to the exposed surfaces 15a and 16a of the sensors 15 and 16, respectively. One junction of a thermocouple 27 located on the surface of the heat sink 10 is provided to give an output dependent on the temperature of the heat sink adjacent to the exposed surfaces 15a and 16a of the sensors 15 and 16. A lead 27a takes the output from the thermocouple 27 to the socket 28. The thermocouple 27, by giving an indication of the temperature of the heat sink 10 adjacent to the exposed surfaces 15a and 16a, gives a sufficiently good guide as to the temperature of the exposed surfaces for the purpose of preheating those surfaces.

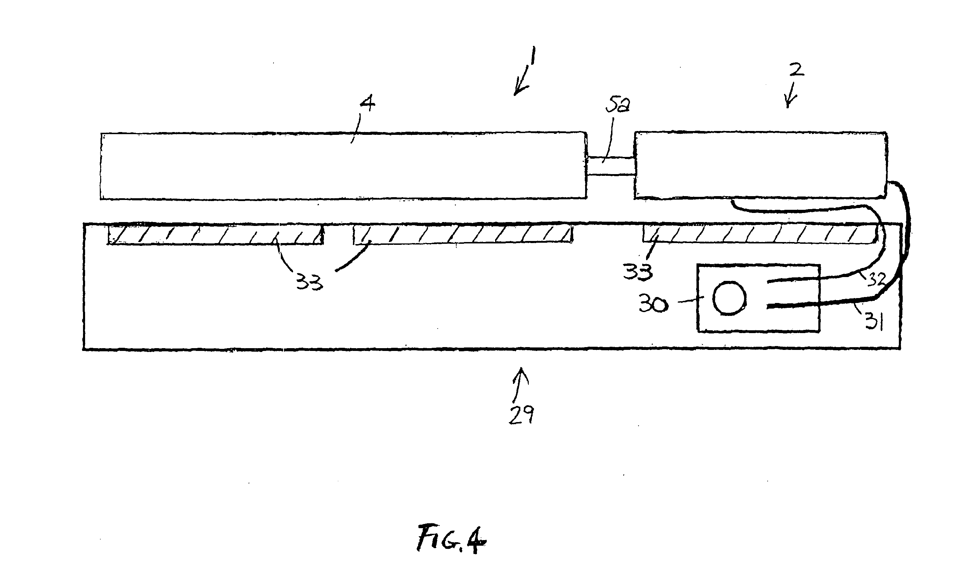

Referring to Fig. 4, the apparatus of the invention also includes a base station indicated generally by the reference numeral 29 on top of which the heat flux measurement device 1 can be placed for preheating the sensor surfaces 15a and 16a. The base station 29 contains a preheater control unit 30 for supplying power to the preheater 26 via a cable 31 which can be connected to the socket 28. The preheater control unit 30 is also arranged to receive outputs from the thermocouple 27 via the socket 28 and a further cable 32. The preheater control unit 30 has a digital display (not shown) that can be set to a desired preheating temperature. When the output from the thermocouple 27 matches the said temperature, the control unit 30 is arranged to cut off the power supply to the preheater 26. The base station 29 also contains three cold air fans 33 which can be activated to cool the heat flux measuring device 1 when required.

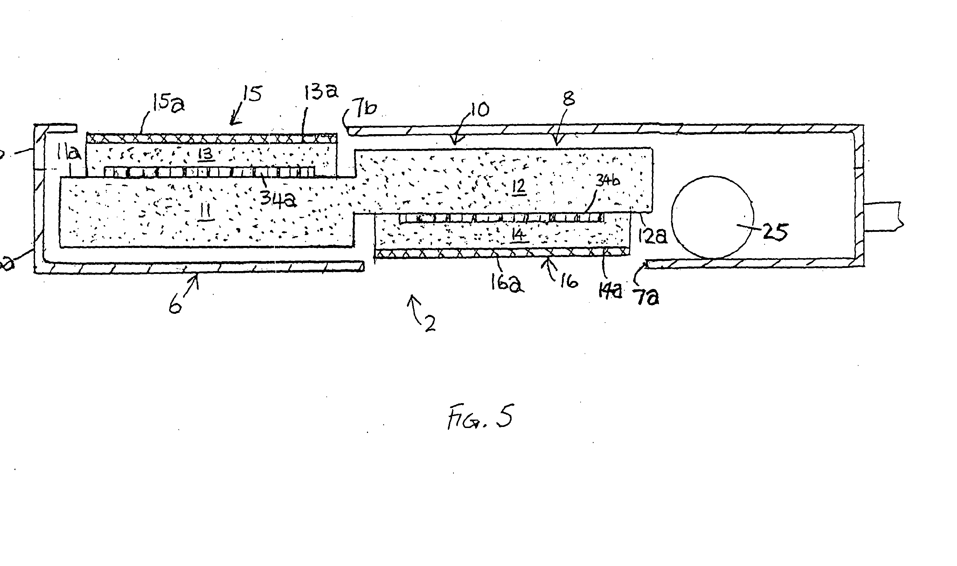

Other forms of electrical heating devices may be used instead of the cartridge heater 26 to pre-heat the exposed surfaces 15a and 16a in accordance with the invention. As shown schematically in Fig. 5 where the same reference numerals are used for the same parts as in Fig. 2, foil heaters 34a and 34b have been inserted in the heat sink 10 between each of the portions 11 and 12 and the mounts 13 and 14, respectively. The foil heaters 34a and 34b may each comprise two layers of thermally conductive foil sandwiching an electrical heating element, or may comprise an etched foil on a dielectric backing of, for example, Mylar, Kapton (trade mark) or mica. Each of the foil heaters 34a and 34b is directly in contact with the lower surface of the mounting blocks 13 and 14, respectively, so that, on activation of the foil heaters, heat passes by thermal conduction from the foil heaters to the surfaces 13a and 14a and from there through the sensors 15 and 16, respectively, to preheat the exposed surfaces 15a and 16a, respectively.

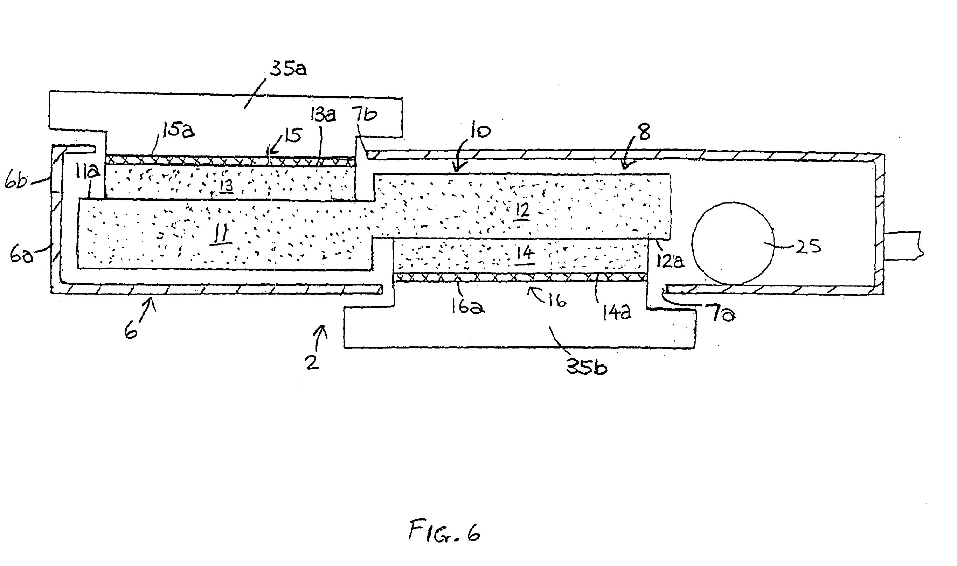

In another option, preheating can be carried out using electrically-heated plates 35a and 35b, respectively, which have their heated surfaces placed directly on the exposed surfaces 15a and 16a, respectively, of the sensors 15 and 16 as shown in Fig. 6, the plates being removed when the exposed surfaces reach the required temperature.

In a further option, provision is made for the electrical connection of the thermocouples 23 and 24 to be changed so that they can be connected to the socket 28 during preheating and used to give an indication of the temperature of the exposed surfaces 15a and 16a during preheating. After preheating, the thermocouples 23 and 24 can be reconnected to the data logger/power source 3.

In use, when it is wished to investigate operating parameters of a tunnel oven having nozzles or burners or other such heaters spaced at intervals along its length, and especially when it is wished to investigate total heat flux incident upon the upper and lower surfaces of an article as it is conveyed on a band through such an oven and obtain heat flux profiles along the oven, the heat flux measuring device 1 is placed on the band and is conveyed through the oven in place of the article. Before the heat flux measuring device 1 is allowed to enter the oven, however, it is placed on the base station 29. The preheater control unit 30 is connected to the socket 28 of the device 1 to receive an output from the thermocouple 27 and to activate the preheater, that is to say, the cartridge heater 26, the foil heaters 34a, 34b or the heated plates 35a, 35b. The exposed surfaces 15a and 16a of the sensors 15 and 16, respectively, are thereby preheated by thermal conduction to a temperature exceeding the dew point of the gas in the oven. Preheating the exposed surfaces 15a and 16a respectively to such a temperature avoids the risk of condensation occurring on those surfaces and readings being seriously distorted. It will generally be found that the exposed surfaces 15a and 16a should be heated to a temperature of approximately 85°C. When the thermocouple 27 indicates the required temperature, the preheater control unit 30 terminates the power supply to the preheater.

The heat flux measuring device is then immediately placed on the conveyor band of the oven so that no substantial cooling of the exposed surfaces takes place in such an orientation that it travels in the direction indicated by the arrow D in Fig. 1, and is conveyed through the oven in place of the articles to be heated. The exposed surface 15a receives heat flux that would have been received by the upper surface of the article conveyed on the band, and the exposed surface 16a receives heat flux that would have been received by the lower surface of the article. As both the exposed surfaces 15a and 16a have a blackened surface and are radiation-absorbing, the sensors 15 and 16 will give outputs representative of the total heat flux, that is to say, both the radiative and the convective components of the heat flux, and in the case of the surface 16a the influence of the oven band temperature as well. The output signals from the thermopiles 17 of both of the sensors 15 and 16 and the associated thermocouples 23a, 24a of the sensor head 2 are carried by the electrical connections through the support bars 5a and 5b to the data logger 3 for storage during a pass of the device 1 through the oven. The data is recorded periodically at intervals of 0.25 sec, that is to say, at a frequency of 4 sec⁻¹. If that frequency is not higher than the frequency of pulses of heat input, for example, from nozzles or burners, it may be found that the results obtained are not repeatable.

After the device 1 has passed through the oven, the data that has been acquired during the pass and stored in the datalogger 3 is downloaded to a computer, and a heat flux profile along the length of the oven for each the upper and lower surfaces 15a and 16a of the device is obtained.

If desired, after one pass through the oven, the heat flux measuring device 1 can be replaced on the base station 29 and cooled using the fans 33. The exposed surfaces 15a and 16a may then be preheated once again for a second pass through the oven.

The apparatus and method of the invention can be used in the monitoring and control of the performance of ovens. Even with the same settings, an oven may not give a consistent performance on different occasions. Once a heat flux profile has been obtained for an oven operating in a desired manner, the oven can be adjusted on a subsequent occasion to give the same heat flux profile or as similar as possible. Also, one or more other ovens can be set to operate in a similar manner by comparing heat flux profiles and adjusting accordingly.

The sensors 15 and 16, or one of them, may each be replaced by a sensor device similar to the sensors 15 and 16 but having a radiation-reflecting surface.

In another arrangement of the apparatus of the invention, the sensors 15 and 16, or one of them, may be each be replaced by a sensor a shown in Fig. 7 comprising an array of eight zones 36a to 36g, respectively, arranged in two parallel lines of four zones. One line consists of two zones 36a and 36c each having a radiation-reflecting surface alternating with two zones 36b and 36d having blackened radiation-absorbing surfaces. The second line consists of two radiation-reflecting zones 36f and 36h alternating with two radiation-absorbing zones 36e and 36h. As can be seen from Fig. 7, the zones are so arranged that the reflecting zones and the absorbing zones alternate in a direction along the length of the lines of zones and also in the transverse direction.

Each of the zones 36a to 36h is provided with a thermopile (not shown) in a thermally insulating layer (not shown) in thermal contact with a heat sink (not shown) similar to the arrangement shown in Fig. 3 and is arranged to give an output indicative of the heat flux incident upon the exposed surface of the zone, the ouputs of the radiation-reflecting zones 36a, 36c, 36f and 36h being summed separately from the outputs of the radiation-absorbing zones 36b, 36d, 36e and 36g so that separate measures of the radiative and convective components of the heat flux can be obtained.

The complete array of zones 36a to 36h may be regarded as a single sensor, or each of the zones may be regarded as an individual sensor.

## Claims

1. A method of measuring heat flux in a heated chamber comprising conveying through at least a portion of the chamber a heat flux measuring device comprising at least one sensor, the heat flux measuring device producing an output from which can be derived a value that is representative of heat flux incident upon an exposed surface of the sensor, and monitoring the said output, the said exposed surface being preheated prior to monitoring the said output to a temperature exceeding the dew point of gas within the heated chamber, the preheating being effected by thermal conduction.

2. A method as claimed in claim 1, wherein the preheating is effected by thermal conduction using a heated surface, preferably an electrically-heated surface.

3. A method as claimed in claim 1 or claim 2, wherein the said output from the heat flux measuring device is, or includes, a measure of the temperature difference across a thermally insulating layer located between the exposed surface of the sensor and a heat sink, the heat sink being in thermal contact with the thermally insulating layer.

4. A method as claimed in any one of claims 1 to 3, wherein the exposed surface of the sensor is preheated by placing a heated surface over and in contact with the exposed surface until the exposed surface reaches a temperature exceeding the dew point of the gas in the heated chamber, and then removing the said heated surface from the said exposed surface prior to monitoring the said output.

5. A method as claimed in any one of claims 1 to 3, wherein the preheating is carried out by activating an electrical heater incorporated in the device.

6. A method as claimed in claim 5, wherein the device includes a heat sink and the electrical heater is located on or within the heat sink.

7. A method as claimed in claim 5 and claim 3, wherein the electrical heater is located between the thermally insulating layer and the heat sink.

8. A method as claimed in claim 6 or claim 7, wherein the electrical heater is in the form of a cartridge heater comprising a tubular casing and an electrical heating element within the casing.

9. A method as claimed in claim 6 or claim 7, wherein the electrical heater is in the form of a foil heater.

10. A method as claimed in claim 9, wherein the foil heater comprises an electrical heating element sandwiched between two thermally conductive foils.

11. A method as claimed in claim 9, wherein the foil heater comprises an etched metallic foil on a dielectric backing.

12. A method as claimed in any one of claims 1 to 11, wherein the exposed surface is preheated to a temperature within the range of from 80°C to 90 °C.

13. A method as claimed in any one of claims 1 to 12, wherein after the heat flux measuring device has been conveyed through the heated chamber, it is cooled and the exposed surface is preheated again for a second pass through the heated chamber.

14. Apparatus for measuring heat flux in a heated chamber comprising at least one sensor having an exposed surface, the apparatus being arranged to produce an output from which can be derived a value that is representative of heat flux incident upon the exposed surface of the sensor, and also comprising means for preheating the said exposed surface by thermal conduction.

15. Apparatus as claimed in claim 14, wherein the preheating means is arranged to heat a surface that is in, or can be brought into, thermal contact with the sensor.

16. Apparatus as claimed in claim 14 or claim 15, wherein the sensor comprises first and second surfaces bounding a region, a thermally insulating layer substantially occupying the said region, and means for providing an output which is a measure of the temperature difference across the layer, the said first surface of the sensor being in thermal contact with a heat sink and the said second surface of the sensor being the said exposed surface.

17. Apparatus as claimed in any one of claims 14 to 16, wherein the preheating means comprises a heated surface that can be placed over and in contact with the exposed surface to preheat the said surface.

18. Apparatus as claimed in any one of claims 14 to 16, wherein the sensor forms part of a heat flux measuring device that is conveyed through a heated chamber, in use, and the preheating means comprises an electrical heater incorporated in the device.

19. Apparatus as claimed in claim 18 and claim 16, wherein the heat flux measuring device also comprises the said heat sink and the electrical heater is located on or within the heat sink.

20. Apparatus as claimed in claim 18 and claim 16, wherein the heat flux measuring device also comprises the said heat sink and the electrical heater is located between the thermally insulating layer and the heat sink.

21. Apparatus as claimed in claim 19 or claim 20, wherein the electrical heater is in the form of a cartridge heater comprising a tubular casing and an electrical heating element within the casing.

22. Apparatus as claimed in claim 21, wherein the electrical heater is in the form of a foil heater.

23. Apparatus as claimed in claim 22, wherein the foil heater comprises an electrical heating element sandwiched between two thermally conductive foils.

24. Apparatus as claimed in claim 22, wherein the foil heater comprises an etched metallic foil on a dielectric backing.

25. Apparatus as claimed in any of claims 14 to 24, wherein there is provided means for enabling temperature control of the preheating means.

26. Apparatus as claimed in any one of claims 14 to 25, which comprises one or more cooling fans for cooling the heat flux measuring device after it has been conveyed through the heated chamber.

27. Apparatus as claimed in any one of claims 14 to 26, wherein the exposed surface of the sensor is arranged to absorb radiation.

28. Apparatus as claimed in any one of claims 14 to 27, wherein one or more further sensors are provided.

29. Apparatus as claimed in any one of claims 14 to 28, wherein the sensor is arranged to respond to the heat flux incident upon an upper surface of an article transported in the heated chamber, and a further radiation-absorbing sensor is provided to respond to the heat flux incident upon a lower surface of the article.

30. Apparatus as claimed in claim 29, wherein means, for example, a thermocouple, is provided to give a measure of the temperature of an oven conveyor band.

31. Apparatus as claimed in any one of claims 14 to 30, wherein one or more sensors having radiation-reflecting exposed surfaces are provided.

32. Apparatus as claimed in any one of claims 14 to 31, wherein the heat flux measuring device has an array of sensors each sensor comprising first and second surfaces bounding a region, a thermally insulating layer substantially occupying said region, and means for providing a signal which is a measure of the temperature difference across the layer, said first surface of each sensor being in thermal contact with a heat sink and said second surface of each sensor being exposed, a plurality of the said exposed surfaces of the array being reflective to radiation and a further plurality of the said exposed surfaces of the array being absorbent to radiation, the sensors of the array being so arranged that the area of radiation-absorbing exposed sensor surface and the area of radiation-reflecting exposed sensor surface are each equally distributed about a mid-line of the array extending along the direction in which in use the device will be transported and about a mid-line of the array extending along the direction transverse to the direction in which in use the device will be transported.

33. Apparatus as claimed in any one of claims 14 to 32, wherein the or each exposed surface is a surface of the thermally-insulating layer of the respective sensor.

34. Apparatus as claimed in any one of claims 14 to 33, wherein the or each exposed surface is a surface of a layer of heat-conductive material having a surface that is in thermal contact with the thermally-insulating layer of the respective sensor.

35. Apparatus as claimed in any one of claimed 14 to 34, wherein the or each sensor comprises one or more thermopiles.

36. Apparatus as claimed in any one of claims 14 to 35, wherein there is provided means for ascertaining the gas temperature in the vicinity of the or each exposed surface during monitoring.

37. Apparatus as claimed in any one of claims 14 to 36, wherein the heat sink is a body of heat conductive material.

38. Apparatus as claimed in any one of claims 14 to 37 including data processing/storage means arranged to travel with the device, in use.

39. Apparatus adapted for carrying out the method as claimed in any one of claims 1 to 13.
